# EUROPÄISCHE PATENTANMELDUNG

(11) **EP 1 541 266 A2**
(43) Veröffentlichungstag der Anmeldung: **15.06.2005**
(21) Anmeldenummer: 04027823.6
(22) Anmeldetag: 24.11.2004
(51) Int. Cl.: B23B 31/107, B01F 13/00

(54) **Rührwerkzeugaufnahme an einer Abtriebswelle eines Rührgerätes**

(30) Priorität: 12.12.2003 DE 10358223
(71) Anmelder: Collomix Rühr-und Mischgeräte GmbH, 85080 Gaimersheim (DE)
(72) Erfinder: Essing, Alexander, 65510 Idstein (DE); Beron, Franz, 85077 Manching (DE); Viehböck, Ingo, 65510 Idstein (DE)
(74) Vertreter: Neubauer, Hans-Jürgen, Dipl.-Phys.

(57) **Zusammenfassung**

Die Erfindung betrifft eine Rührwerkzeugaufnahme (1) an einer Abtriebswelle (13) eines Rührgerätes, mit einem rohrförmigen Aufnahmeteil (2), in das ein Schaftende (16) eines Rührwerkzeuges (17) formschlüssig und dabei verdrehfest einsteckbar ist, und mit Mitteln zur Arretierung des eingesteckten Schaftendes (16) im Aufnahmeteil (2). Eine besonders einfache Handhabung lässt sich erfindungsgemäß dadurch erreichen, dass eine Arretiervorrichtung eine handbetätigbare Schiebemuffe (6) mit einer federbelasteten, auf dem Aufnahmeteil (2) verschiebbaren Druckscheibe (23) und mit wenigstens einem in einer Führungsnut (24,25) im Aufnahmeteil (2) geführten Arretierbolzen (26,27) aufweist. Die Führungsnut (24,25) verläuft in der Rohrwand des Aufnahmeteils (2) mit der Nutenlänge in Querrichtung und mit der Nutentiefe in Richtung auf die Längsachse (5) mit einer Schräge in Betätigungsrichtung der Schiebemuffe (6) nach radial außen und sie ist so tief eingeschnitten, dass sich ein Durchbruch (28,29) zum Aufnahmeteil - Innenbereich (3) ergibt. Der Arretierbolzen (26,27) ist formschlüssig und über die Nutentiefe verschiebbar in die Führungsnut (24,25) eingesetzt und greift in seiner radial innenliegenden Endstellung im Bereich des Durchbruches (28,29) in eine Umfangsnut (18) im Schaftende (16) des Rührwerkzeuges (17) zum Zwecke einer Arretierung ein. Die Bewegung des Arretierbolzens (26,27) wird einerseits durch einen Muffenbund (8) der Schiebemuffe (6) und andererseits durch die Druckscheibe (23) bewerkstelligt.

## Beschreibung

Die Erfindung bezieht sich auf eine Rührwerkzeugaufnahme an einer Abtriebswelle eines Rührgerätes, mit einem rohrförmigen Aufnahmeteil, in das ein Schaftende eines Rührwerkzeuges formschlüssig und dabei verdrehfest einsteckbar ist, und mit Mitteln zur Arretierung des eingesteckten Schaftendes im Aufnahmeteil.

Es sind Rühr- und Mischmaschinen auf dem Markt, mit denen größere Mengen von Baumaterialen durchmischt werden können, wobei in der Regel ein Umwälzen des Baumaterials durch das Rotieren einer Trommel erfolgt, die gleichzeitig als Behälter für das Baumaterial dient. Derartige Mischmaschinen sind jedoch nur für Einsatzzwecke gedacht und rentabel, bei denen kubikmeterweise Baumaterial verbraucht wird.

Für das Rühren und Mischen kleinerer Materialmengen, ebenso für den Einsatz auf Baustellen vorgesehen, sind handbetätigbare Rührmaschinen bekannt, die elektrisch angetrieben sind. Gemischt und gerührt werden, insbesondere Fertigputz und -mörtel, Spachtelmassen, Farben, Kleber und dergleichen.

Eine durch die DE 44 40 566 C1 bekannte handbetätigbare Rührmaschine weist gegenüber dem vorbekannten Stand der Technik hinsichtlich ihrer Handhabung und ihrer Sicherheit wesentliche Verbesserungen auf. So ist zum einen zusätzlich zu dem am ersten Handgriff liegenden Leistungssteller, der mit der einen Hand betätigbar ist, ein Taster als Ein/Aus-Schalter am zweiten Handgriff angeordnet, wobei der Taster mit der anderen Hand zu betätigen ist. Die Rührstäbe bzw. die Rührstabenden werden von unten her in senkrecht stehende Getriebeabtriebswellen eingesteckt und dort verdrehfest und gegen Axialkräfte gesichert gehalten. Um dies unter Einsatz konstruktiv einfacher Mittel rasch durchführen zu können greift einerseits ein Vorsprung am unteren stirnseitigen Ende der Getriebeabtriebswelle in einen Ausschnitt eines am Rührstab angeschweißten Ringes ein und andererseits erfolgt eine Axialsicherung mittels stirnseitiger Schraube, deren Schraubenbolzen in ein endseitiges Längsgewinde des Rührstabendes einschraubbar ist und deren Schraubenkopf sich am stirnseitigen, oberen Rand der Getriebeabtriebswelle abstützt.

Der Erfindung liegt die Aufgabe zugrunde, eine Rührwerkzeugaufnahme der eingangs genannten Gattung zu optimieren, um insbesondere die Handhabung noch weiter zu vereinfachen.

Diese Aufgabe wird erfindungsgemäß mit den kennzeichnenden Merkmalen des Patentanspruches 1 gelöst.

Danach weist eine Arretiervorrichtung eine handbetätigbare Schiebemuffe mit einer federbelasteten, auf einem Aufnahmeteil verschiebbaren Druckscheibe und mit wenigstens einem in einer Führungsnut im Aufnahmeteil geführten Arretierbolzen auf, wobei die Schiebemuffe mit einem Muffenbund auf dem Aufnahmeteil axial verschiebbar gehalten ist, während zwischen dem Aufnahmeteil und der Schiebemuffe ein Ringraum gebildet wird, und die Führungsnut in der Rohrwand des Aufnahmeteils mit der Nutenlänge in Querrichtung und mit der Nutentiefe in Richtung auf die Längsachse mit einer Schräge in Betätigungsrichtung der Schiebemuffe nach radial außen verläuft und so tief eingeschnitten ist, dass sich ein Durchbruch zum Aufnahmeteil - Innenbereich ergibt.

Der Arretierbolzen ist formschlüssig und über die Nutentiefe verschiebbar in die Führungsnut eingesetzt und weist eine solche Länge auf, dass er in jeder Lage mit Bolzenüberstand in den Ringraum hineinragt, wobei der Muffenbund von der Einsteckseite her und die Druckscheibe im Ringraum von der Antriebsseite her zum Zwecke einer Halterung und Verlagerung des Arretierbolzens am Bolzenüberstand anliegen, dergestalt, dass in einer Arretierstellung der Arretierbolzen von der federbelasteten Druckscheibe in eine radial innere Lage in der Führungsnut verlagert ist und mit einem Bolzenbereich durch den Durchbruch in den Aufnahmeteil-Innenbereich hineinragt für einen Arretiereingriff in eine zugeordnete Arretierausnehmung am Schaftende des Rührwerkzeuges, und dass in einer Freigabestellung durch handbetätigtes Verschieben der Schiebemuffe zur Antriebsseite hin der Arretierbolzen mittels des Muffenbundes schräg radial nach außen aus dem Bereich des Arretiereingriffs verlagert ist, wodurch die Arretierung für ein eingestecktes Schaftende des Rührwerkzeuges freigegeben wird.

Mit diesen erfindungsgemäßen Maßnahmen lässt sich in äußerst kurzer Zeit eine absolut betriebssichere Arretierung des Rührwerkzeuges in Axialrichtung bewerkstelligen. Dazu muss nämlich lediglich das Schaftende des Rührwerkzeuges in das rohrförmige Aufnahmeteil eingeschoben werden. Das Einrasten des Arretierbolzens in eine dafür vorgesehene Ausnehmung am Schaftende des Rührwerkzeuges erfolgt dann ohne weiteres Zutun der Bedienperson. Ein Entriegeln lässt sich ebenso leicht und rasch bewerkstelligen, indem die Bedienperson lediglich mit einem kurzen Handgriff die Schiebemuffe und damit den Arretierbolzen in die Freigabestellung bewegt.

Eine günstige Aufnahme und Übertragung von insbesondere während des Betriebes des Rührgerätes auf die Rührwerkzeugaufnahme wirkenden Kräfte wird gemäß Anspruch 2 dadurch noch weiter verbessert, dass zwei diametral gegenüberliegend in das Aufnahmeteil eingearbeitete Führungsnuten vorgesehen sind, wobei in jede Führungsnut ein Arretierbolzen eingesetzt ist.

Besonders vorteilhaft ist, gemäß Anspruch 3 die Druckscheibe auf ihrer den Arretierbolzen zugewandten Seite mit einer entsprechend der radialen Bewegungsrichtung der Arretierbolzen verlaufenden Nut auszustatten, in der die Arretierbolzen während ihrer Gleitbewegung in den Führungsnuten stets mittig zentriert bleiben.

Ein kontrollierter Bewegungsablauf der Arretierbolzen lässt sich gemäß Anspruch 4 dadurch erreichen, dass die Länge eines jeden Arretierbolzens und die den Ringraum begrenzende Wandung, d.h. der Innendurchmesser der Schiebemuffe, so aufeinander abgestimmt sind, dass die Arretierbolzen während ihrer radialen Auswärtsbewegung vor Verlassen der Führungsnuten an der Wandung der Schiebemuffe zur Anlage kommen.

Ein konstruktiv einfacher, betriebssicherer Aufbau lässt sich in einer besonders bevorzugten Ausführungsform nach Anspruch 5 dadurch erreichen, dass eine die Druckscheibe beaufschlagende Druckfeder das Aufnahmeteil umgibt und sich innerhalb des Ringraumes an einem Führungsring für die Schiebemuffe abstützt, der wiederum an einer Schulter des abgesetzten rohrförmigen Aufnahmeteiles anliegt.

Praktisch ohne konstruktiven Mehraufwand lässt sich eine Drehmitnahmeverbindung zwischen Rührwerkzeug und rohrförmigem Aufnahmeteil gemäß Anspruch 6 dadurch bewerkstelligen, dass eine Ausnehmung des Aufnahmeteiles eine dem Schaftende des Rührwerkzeuges entsprechende Profilierung, insbesondere ein Sechskantprofil, aufweist.

Eine einfache, funktionssichere Verbindung zwischen Rührwerkzeugaufnahme und der Abtriebswelle des Rührgerätes ist nach Anspruch 7 dadurch geschaffen, dass ein antriebsseitiger Endabschnitt des Aufnahmeteiles mit einem Innengewinde versehen ist, in das ein mit einem Außengewinde versehener Gewindezapfen der Abtriebswelle einschraubbar ist, wobei der Gewindezapfen dem Schaftende des Rührwerkzeuges gleichzeitig als Anschlag dient.

Damit die Schiebemuffe auch unter widrigen Bedingungen auf der Baustelle und bei einer wodurch auch immer hervorgerufenen Schwergängigkeit gut handhabbar und bedienbar bleibt, ist ihre Umfangsfläche mit einer Anzahl von Rillen ausgestattet, um einen intensiven und rutschfesten Kontakt mit der Hand der Bedienperson sicherstellen zu können.

Ein Ausführungsbeispiel der Erfindung mit weiteren Einzelheiten, Merkmalen und Vorteilen wird anhand einer Zeichnung näher erläutert. Dabei zeigen:
- Fig. 1: eine perspektivische Ansicht einer Rührwerkzeugaufnahme mit Rührwerkzeug und Abtriebswelle,
- Fig. 2: eine wiederum perspektivische Ansicht der Rührwerkzeugaufnahme unter Weglassen der Schiebemuffe,
- Fig. 3: einen Längsschnitt durch die Rührwerkzeugaufnahme in Arretier-stellung,
- Fig. 4: einen abschnittsweisen Längsschnitt durch die Rührwerkzeugaufnahme in der Freigabestellung und
- Fig. 5: eine Schnittdarstellung der Rührwerkzeugaufnahme gemäß Pfeile V in Figur 4

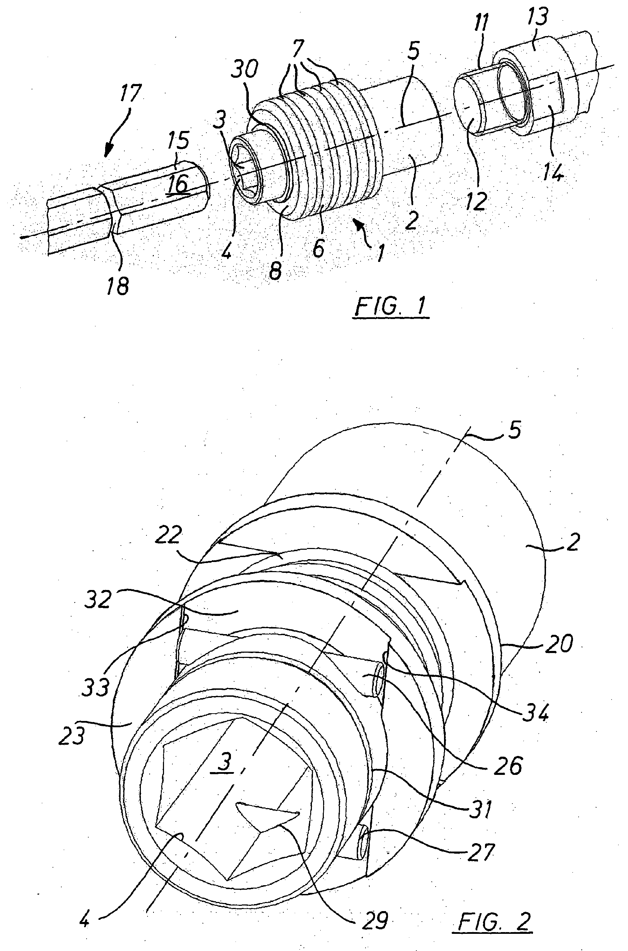

In Fig. 1 ist eine Rührwerkzeugaufnahme 1 eines handbetätigbaren Rührgerätes dargestellt, u.a. bestehend aus einem rohrförmigen Aufnahmeteil 2, dessen Innenbereich 3 mit einer Profilierung 4, insbesondere einem Sechskantprofil, ausgestattet ist. Das rohrförmige Aufnahmeteil 2 ist von einer axial (Längsachse 5) bewegbaren Schiebemuffe 6 umgeben, deren Umfangsfläche mit einer Anzahl von Rillen 7 zur besseren manuellen Handhabung ausgestattet ist. Den stirnseitigen Abschluss der Schiebemuffe 6 bildet ein Muffenbund 8.

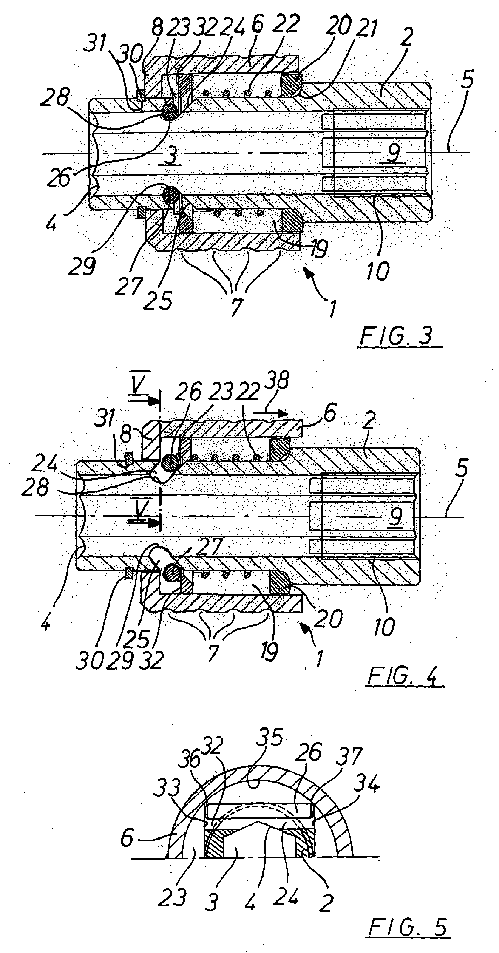

Ein antriebseitiger Endabschnitt 9 des rohrförmigen Aufnahmeteiles 2 ist mit einem Innengewinde 10 versehen (Fig. 3), in das ein mit einem Außengewinde 11 versehener Gewindezapfen 12 einer Abtriebswelle 13 des Rührgerätes einschraubbar ist, wobei beidseitige Abflachungen 14 am Umfang der Abtriebswelle 13 für den Eingriff eines Gabelschlüssels vorgesehen sind.

In den Innenbereich 3 der Rührwerkzeugaufnahme 1 ist ein mit einer entsprechenden Profilierung 15 versehenes Schaftende 16 eines Rührwerkzeuges 17 einsteckbar. Eine im Bereich des Schaftendes 16 angeordnete Umfangsnut 18 dient, wie weiter unten erläutert, der axialen Arretierung des Rührwerkzeuges 17 in der Rührwerkzeugaufnahme 1.

In Figur 2 ist in einer weiteren Perspektivdarstellung das rohrförmige Aufnahmeteil 2 gezeigt, und zwar unter Weglassung der Schiebemuffe 6, so dass die in einem zwischen Schiebemuffe 6 und Aufnahmeteil 2 gebildeten Ringraum 19 (Fig.3, Fig.4) vorhandenen weiteren Funktionselemente der Rührwerkzeugaufnahme 1 erkennbar werden.

Danach ist zunächst ein Führungsring 20 für die axial bewegbare Schiebemuffe 6 vorgesehen, der an einer Schulter 21 des abgesetzten rohrförmigen Aufnahmeteiles 2 anliegt. Am Führungsring 20 stützt sich eine das Aufnahmeteil 2 umgebende Druckfeder 22 ab, die gegenüberliegend eine Druckscheibe 23 beaufschlagt, die wiederum zwei, in diametral gegenüberliegend in das Aufnahmeteil 2 eingearbeitete Führungsnuten 24, 25 eingesetzte Arretierbolzen 26, 27 kontaktiert.

Wie sich in weiterer Zusammenschau mit den Fig. 3 und 4 ergibt, verlaufen die Führungsnuten 24, 25 im rohrförmigen Aufnahmeteil 2 mit der Nutenlänge in Querrichtung, d.h. quer zur Längsachse 5, und mit der Nutentiefe in Richtung auf die Längsachse 5, mit einer Schräge in Betätigungsrichtung der Schiebemuffe 6 nach radial außen. Darüber hinaus sind die Führungsnuten 24, 25 so tief eingeschnitten, dass sich jeweils ein Durchbruch 28, 29 zum Aufnahmeteil-Innenbereich 3 ergibt.

Jeder Arretierbolzen 26, 27 ist formschlüssig und über die Nutentiefe verschiebbar in die Führungsnut 24, 25 eingesetzt und weist eine solche Länge auf, dass er in jeder Lage mit Bolzenüberstand in den Ringraum 19 hineinragt, so dass der Muffenbund 8 von der Einsteckseite her und die Druckscheibe 23 im Ringraum 19 von der Antriebsseite her zum Zwecke einer gemeinsamen Halterung und Verlagerung der Arretierbolzen 26, 27 am jeweiligen Bolzenüberstand anliegen.

Sind die radial einwärts sich bewegenden Arretierbolzen 26,27 am Nutengrund der Führungsnuten 24, 25 angelangt, so ist damit auch ein Anschlag für die von der Druckfeder 22 beaufschlagte Druckscheibe 23 geschaffen. Die Axialbewegung der Schiebemuffe 6 wiederum ist darüber hinaus durch einen Sicherungsring 30 begrenzt, der in eine umfängliche Vertiefung 31 im Aufnahmeteil 2 eingesetzt ist.

Die Druckscheibe 23 ist auf ihrer den Arretierbolzen 26, 27 zugewandten Seite mit einer entsprechend der radialen Bewegungsrichtung der Arretierbolzen, 26, 27 verlaufenden und diese aufnehmenden Nut 32 ausgestattet. Dabei gleiten bzw. rollen die beiden Arretierbolzen 26, 27 an Nutenflanken 33, 34 entlang und sind somit stets mittig geführt.

Wie sich insbesondere aus Fig. 5 ergibt sind die Länge eines jeden Arretierbolzens 26, 27 und die den Ringraum 19 begrenzende Wandung 35 der Schiebemuffe 6 so aufeinander abgestimmt, dass die Arretierbolzen 26, 27 während ihrer radialen Auswärtsbewegung vor Verlassen der Führungsnuten 24, 25 an der Wandung 35 der Schiebemuffe 6 zur Anlage (Anlagen 36, 37) kommen.

Das formschlüssige und dabei verdrehfeste, mit einer axialen Arretierung einher gehende Einsetzen des Rührwerkzeuges 17 in die Rührwerkzeugaufnahme 1 bzw. das Herausnehmen aus der Rührwerkzeugaufnahme 1 geschieht nun folgendermaßen:
Beim Einschieben des Schaftendes 16 des Rührwerkzeuges 17 in den Innenbereich 3 des rohrförmigen Aufnahmeteiles 2 entsteht allein schon aufgrund der übereinstimmenden Profilierungen 4,15 eine verdrehfeste Mitnahmeverbindung. Gleichzeitig werden die Arretierbolzen 26, 27 entgegen der Federkraft der Druckfeder 22 schräg nach radial außen gedrückt. Die Druckscheibe 23 wird in gleicher Weise in Richtung Abtriebswelle 13 bewegt.
Gelangt beim weiteren Einschieben des Rührwerkzeuges 17 die Umfangsnut 18 in den Wirkbereich der Arretierbolzen 26, 27, so rasten diese, unterstützt durch die Druckfeder 22, in die Umfangsnut 18 ein , das Rührwerkzeug 17 ist somit auch axial verriegelt. Ein weitergehendes Einschieben würde auch durch den Gewindezapfen 12 der Abtriebswelle 13 verhindert werden, der insofern als Anschlag wirkt.
Ein Überführen des Rührwerkzeuges 17 in die Freigabestellung geschieht in der Weise, dass durch handbetätigtes Verschieben der Schiebemuffe 6 zur Abtriebswelle 13 hin (Pfeil 38) die Arretierbolzen 26, 27 mittels des Muffenbundes 8 schräg radial nach außen aus dem Bereich des Arretiereingriffes verlagert werden, wodurch das eingesteckte Schaftende 16 des Rührwerkzeuges 17 freigegeben wird.

## Patentansprüche

1. Rührwerkzeugaufnahme an einer Antriebswelle eines Rührgerätes,
mit einem rohrförmigen Aufnahmeteil, in das ein Schaftende eines Rührwerkzeuges formschlüssig und dabei verdrehfest einsteckbar ist,
und mit Mitteln zur Arretierung des eingesteckten Schaftendes im Aufnahmeteil,
**dadurch gekennzeichnet,**
**dass** eine Arretiervorrichtung eine handbetätigbare Schiebemuffe (6) mit einer federbelasteten, auf dem Aufnahmeteil (2) verschiebbaren Druckscheibe (23) und mit wenigstens einem in einer Führungsnut (24,25) im Aufnahmeteil (2) geführten Arretierbolzen (26,27) aufweist,
**dass** die Schiebemuffe (6) mit einem Muffenbund (8) auf dem Aufnahmeteil (2) axial verschiebbar gehalten ist, wobei zwischen dem Aufnahmeteil (2) und der Schiebemuffe (6) ein Ringraum (19) gebildet wird,
**dass** die Führungsnut (24,25) in der Rohrwand des Aufnahmeteils (2) mit der Nutenlänge in Querrichtung und mit der Nutentiefe in Richtung auf die Längsachse (5) mit einer Schräge in Betätigungsrichtung der Schiebemuffe (6) nach radial außen verläuft und so tief eingeschnitten ist, dass sich ein Durchbruch (28,29) zum Aufnahmeteil - Innenbereich (3) ergibt,
**dass** der Arretierbolzen (26,27) formschlüssig und über die Nutentiefe verschiebbar in die Führungsnut (24,25) eingesetzt ist und eine solche Länge aufweist, dass er in jeder Lage mit Bolzenüberstand in den Ringraum (19) hineinragt, wobei der Muffenbund (8) von der Einsteckseite her und die Druckscheibe (23) im Ringraum (19) von der Antriebsseite her zum Zwecke einer Halterung und Verlagerung des Arretierbolzens (26,27) am Bolzenüberstand anliegen, dergestalt,
**dass** in einer Arretierstellung der Arretierbolzen (26,27) von der federbelasteten Druckscheibe (23) in eine radial innere Lage in der Führungsnut (24,25) verlagert ist und mit einem Bolzenbereich durch den Durchbruch (28,29) in den Aufnahmeteil - Innenbereich (3) hineinragt für einen Arretiereingriff in eine zugeordnete Arretierausnehmung (18) am Schaftende (16) des Rührwerkzeuges (17), und
**dass** in einer Freigabestellung durch handbetätigtes Verschieben der Schiebemuffe (6) zur Antriebsseite hin der Arretierbolzen (26,27) mittels des Muffenbundes (8) schräg radial nach außen aus dem Bereich des Arretiereingriffs verlagert ist, wodurch die Arretierung für das eingesteckte Schaftende (16) des Rührwerkzeuges (17) freigegeben wird.

2. Rührwerkzeugaufnahme nach Patentanspruch 1, **gekennzeichnet durch** zwei diametral gegenüberliegend in das Aufnahmeteil (2) eingearbeitete Führungsnuten (24,25), wobei in jede Führungsnut (24,25) ein Arretierbolzen (26,27) eingesetzt ist.

3. Rührwerkzeugaufnahme nach Patentanspruch 2, **dadurch gekennzeichnet, dass** die Druckscheibe (23) auf ihrer den Arretierbolzen (26,27) zugewandten Seite mit einer entsprechend der radialen Bewegungsrichtung der Arretierbolzen (26,27) verlaufenden und diese zwischen Nutenflanken (33,34) aufnehmenden Nut (32) ausgestattet ist.

4. Rührwerkzeugaufnahme nach Patentanspruch 2, **dadurch gekennzeichnet dass** die Länge eines jeden Arretierbolzens (26,27) und die den Ringraum (19) begrenzende Wandung (35) der Schiebemuffe (6) so aufeinander abgestimmt sind, dass die Arretierbolzen (26,27) während ihrer radialen Auswärtsbewegung vor Verlassen der Führungsnuten (24,25) an der Wandung (35) der Schiebemuffe (6) zur Anlage kommen.

5. Rührwerkzeugaufnahme nach Patentanspruch 1, **dadurch gekennzeichnet, dass** eine die Druckscheibe (23) beaufschlagende Druckfeder (22) das Aufnahmeteil (2) umgibt und sich innerhalb des Ringraumes (19) an einem Führungsring (20) für die Schiebemuffe (6) abstützt, der wiederum an einer Schulter (21) des abgesetzten rohrförmigen Aufnahmeteiles (2) anliegt.

6. Rührwerkzeugaufnahme nach Patentanspruch 1, **dadurch gekennzeichnet, dass** der Innenbereich (3) des rohrförmigen Aufnahmeteiles (2) eine dem Schaftende (16) des Rührwerkzeuges (17) entsprechende Profilierung (4), insbesondere ein Sechskantprofil, aufweist.

7. Rührwerkzeugaufnahme nach Patentanspruch 1, **dadurch gekennzeichnet, dass** ein antriebsseitiger Endabschnitt (9) des Aufnahmeteiles (2) mit einem Innengewinde (10) versehen ist, in das ein mit einem Außengewinde (11) versehener Gewindezapfen (12) der Abtriebswelle (13) des Rührgerätes einschraubbar ist, wobei der Gewindezapfen (12) dem Schaftende (16) des Rührwerkzeuges (17) als Anschlag dient.

8. Rührwerkzeugaufnahme nach Patentanspruch 1, **dadurch gekennzeichnet, dass** eine Schiebemuffen - Umfangsfläche mit einer Anzahl von Rillen (7) zur besseren manuellen Handhabung ausgestattet ist.
